# EUROPÄISCHE PATENTANMELDUNG

(11) **EP 2 030 785 A2**
(43) Veröffentlichungstag der Anmeldung: **04.03.2009**
(21) Anmeldenummer: 08162914.9
(22) Anmeldetag: 25.08.2008
(51) Int. Cl.: B32B 37/10

(54) **Laminator, Andrückmembran und Verfahren für das Laminieren von Bauteilstapeln**

(30) Priorität: 30.08.2007 DE 102007041261
(71) Anmelder: Meier Vakuumtechnik GmbH, 46395 Bocholt (DE)
(72) Erfinder: Stevens, Hans-Gerd, 46399 Bocholt (DE)
(74) Vertreter: Linnemann, Winfried

(57) **Zusammenfassung**

Die Erfindung betrifft einen Laminator (1) für das Laminieren von Bauteilen, insbesondere Solarzellenmodulen oder Verbundglasscheiben, durch kombinierte Anwendung von Andrückkraft und Wärme, wobei der Laminator (1) wenigstens eine ein oder mehrere Bauteilstapel aufnehmende Laminierkammer (3) mit einer Bauteilauflage (4) und wenigstens einer Heizeinrichtung (5), bestehend aus jeweils mindestens einem Heizelement (51), umfasst, wobei in der Kammer (3) oberhalb der Bauteilauflage (4) relativ zu dieser beweglich mindestens eine elastische und/oder flexible Andrückmembran (2) druckdicht eingespannt ist, die einen unteren Kammerraum (31) von einem oberen Kammerraum (32) trennt, und wobei zumindest der untere Kammerraum (31) luftdicht verschließbar sowie evakuierbar und belüftbar ist.

Der Laminator (1) gemäß Erfindung ist **dadurch gekennzeichnet, dass** mindestens ein Heizelement (51) integral mit der Andrückmembran (2) ausgeführt ist.

Die Erfindung betrifft außerdem eine Andrückmembran (2) und ein Verfahren für das Laminieren von Bauteilstapeln.

## Beschreibung

Die vorliegende Erfindung betrifft einen Laminator für das Laminieren von Bauteilstapeln, insbesondere Solarzellenmodule oder Verbundglasscheiben, durch kombinierte Anwendung von Andrückkraft und Wärme, wobei der Laminator wenigstens eine ein oder mehrere Bauteilstapel aufnehmende Laminierkammer mit einer Bauteilauflage und einer Heizeinrichtung umfasst, wobei in der Kammer oberhalb der Bauteilauflage relativ zu dieser beweglich eine flexible Andrückmembran druckdicht eingespannt ist, die einen unteren Kammerteil von einem oberen Kammerteil trennt, und wobei zumindest der untere Kammerteil mit dem Bauteilstapel luftdicht verschließbar, sowie evakuierbar und belüftbar ist und die zum Laminieren erforderliche Wärme dem Bauteilstapel durch mindestens ein Heizelement einer Heizeinrichtung zugeführt wird. Weiter betrifft die Erfindung eine Andrückmembran und ein Verfahren für das Laminieren von Bauteilstapeln.

Ein Laminator der eingangs genannten Art ist beispielsweise aus der WO 94/29106 A1 bekannt. Ein derartiger Laminator besteht im Wesentlichen aus einer oder mehreren Membran-Formpressen, mit welcher die zu laminierenden Einzelteile der Bauteilstapel aufeinander gedrückt werden und aus mindestens einer Heizeinrichtung, mit welcher die zum Verbinden der Einzelteile erforderliche Wärme in die Bauteile eingebracht wird. Der zum Laminiervorgang erforderliche Pressdruck wird über eine Andrückmembran aus elastischem und flexiblem Material, beispielsweise Silikongummi, auf den Bauteilstapel aufgebracht. Die Andrückmembran teilt dabei den Innenraum einer luftdicht verschließbaren Laminierkammer druckdicht in einen unteren Kammerraum, in dem sich eine Bauteilauflage und der Bauteilstapel befinden, und einen oberen Kammerraum oberhalb der Andrückmembran. Der erforderliche Anpressdruck der Andrückmembran wird über ein Druckgefälle zwischen den beiden Kammerräumen erzeugt, wobei durch den höheren Druck in dem oberen, dem Bauteilstapel abgewandten Kammerraum die Membran auf den Bauteilstapel gepresst wird. Üblicherweise wird dazu in dem unteren Kammerraum ein Unterdruck erzeugt, während der obere Kammerraum mit Atmosphärendruck belüftet wird oder zur Unterstützung mit einem Überdruck versorgt werden kann.

Die für das Verbinden der Einzelteile erforderliche Wärme wird üblicherweise durch eine Heizeinrichtung, bestehend aus elektrischen Heizelementen oder aus Leitungskanälen zum Transport eines Wärmeübertragungsmittels, in den Bauteilstapel eingeleitet. In der einschlägigen Praxis wird die Heizeinrichtung dabei meistens in der Bauteilauflage ausgeführt. Die zu verbindenden Schichten der Bauteilstapel befinden sich jedoch oft näher an der Oberfläche des laminierten Bauteils als an der Auflagefläche. Bei einem Laminator der eingangs genannten Art ist deshalb durch den größeren Abstand zwischen der Kontaktfläche der Heizeinrichtung und der zu laminierenden Schicht eine relativ große Energiemenge und eine relativ lange Zeit zum Erwärmen und auch zum abschließenden Abkühlen notwendig. Des Weiteren reagiert die große aufzuheizende und abzukühlende Masse relativ träge in der Temperaturführung, was eine Optimierung der Prozessführung in Bezug auf wirtschaftliche Taktzeiten bei gleichzeitig geringer Ausschussquote schwierig macht.

DE 41 12 607 A1 schlägt deshalb eine Anordnung vor, bei welcher die Wärme durch die Membran hindurch auf die zu erwärmende oberflächennahe Schicht des Bauteilstapels übertragen wird. Die Heizeinrichtung besteht dabei aus einer flexiblen Heizmatte, welche sich im oberen Kammerraum oberhalb der Andrückmembran befindet und auch im Anpresszustand der Membran lose auf dieser aufliegt. Dadurch kann es jedoch an Kanten und Randbereichen der zu laminierenden Bauteile oder bei komplexeren Oberflächenformen zu einem schlechten Wärmeübergang kommen.

WO 98/38033 A1 zeigt dagegen eine multifunktionale Membranpresse, bei welcher zusätzlich zur üblichen Heizeinrichtung die Andrückmembran an ihrer Oberfläche mit einer starren Heizplatte in Kontakt gebracht werden kann, nachdem die Andrückmembran auf den Bauteilstapel gepresst worden ist. Dazu ist für den Laminator jedoch eine weitere Hubeinrichtung für das Nachführen der oberen Heizplatte erforderlich. Außerdem ist durch zusätzlich notwendige Verfahrensschritte und die zeitweilige Aufhebung der Berührung von Heizeinrichtung und Andrückmembran der Energie- und Zeitbedarf erheblich. Weiterhin muss die starre obere Heizplatte eine genaue Negativform derjenigen Oberfläche bilden, die durch die Andrückmembran gebildet wird, wenn diese auf die Oberfläche des Bauteilstapels gepresst wird.

Für die vorliegende Erfindung stellt sich deshalb die Aufgabe, einen Laminator der eingangs genannten Art, eine Andrückmembran dafür und ein Verfahren für das Laminieren von Bauteilstapeln zu schaffen, welche die vorstehend dargelegten Nachteile beim Beheizen des Bauteilstapels vermeiden und mit denen insbesondere eine wirtschaftliche Fertigung durch Verkürzung der Taktzeiten, Verringerung des Energieverbrauchs und Vermeidung von Ausschuss durch verbesserte Prozessführung gewährleistet wird.

Die Lösung des den Laminator betreffenden Teils dieser Aufgabe gelingt erfindungsgemäß mit einem Laminator der eingangs genannten Art, bei welchem mindestens ein Heizelement zum Aufheizen des Bauteilstapels integral mit der Andrückmembran ausgeführt ist.

Ein Laminator mit einer beheizbaren Andrückmembran, welche zumindest in Teilbereichen mit einem integralen Heizelement versehen ist, bietet dabei den Vorteil, dass die Wärme durch den Laminator direkt in unmittelbarer Nähe der Stelle erzeugt wird, an der sie eigentlich nur benötigt wird, nämlich unterhalb der Andrückmembran in den zu laminierenden oberflächennahen Schichten des Bauteilstapels. Der Wärmeweg ist dabei sehr kurz und ein Wärmeverlust auf diesem Weg sehr gering. Eine Aufheizung der zu laminierenden Schichten kann somit wesentlich schneller und effektiver erfolgen. Eine Beheizung des Bauteilstapels von der Bauteilauflage her ist damit nicht mehr notwendig oder dient nur noch dem Halten einer gewissen Grundwärmemenge, etwa um die Temperaturdifferenzen zum Maschinenbett möglichst klein zu halten und einen schnellen Abfluss der Wärme in die tieferen Schichten des Bauteilstapels oder in eine kältere Bauteilauflage zu verhindern.

Beim Laminieren von Bauteilstapeln mit einer geringen Bauteilstärke kann es sogar vorteilhaft sein, die Bauteilauflage überhaupt nicht zu beheizen, sondern die Bauteilauflage vom Maschinenbett her als wärmeisolierte Auflagefläche auszuführen. Damit wird der notwendige Wärmeeintrag noch geringer, weil lediglich der Bauteilstapel und die Andrückmembran aufgeheizt werden müssen. Die entsprechenden Taktzeiten können damit weiter verkürzt werden.

Auch eine zum Taktwechsel notwendige Abkühlungsphase kann demzufolge kürzer gewählt werden, da eine größere Masse des Bauteilstapels unterhalb der zu laminierenden Schichten nicht höher aufgeheizt werden muss, um die notwendige Laminiertemperatur zu erzielen, sondern diese Masse nur auf einen Temperaturwert gebracht werden muss, der eine gleichmäßige Temperatur auf beiden Seiten der zu laminierenden Schichten gewährleistet. Dies verringert auch die Gefahr des Überhitzens und beugt so der Produktion von Ausschuss vor.

Ein weiterer erheblicher Vorteil besteht darin, dass aufgrund der geringeren im Taktwechsel aufzuheizenden und abzukühlenden Massen eine weniger träge und somit genauere Temperaturführung möglich ist, was zu einer sichereren Prozessführung beiträgt. Daraus resultiert eine Steigerung der Qualitätsrate trotz der Verringerung der Taktzeiten.

Vorteilhafte Ausgestaltungen und Weiterbildungen des Gegenstandes das Anspruchs 1 sind in den Ansprüchen 2 bis 32 angegeben.

Die Lösung des die Andrückmembran betreffenden Teils der Aufgabe gelingt erfindungsgemäß mit einer Andrückmembran nach Anspruch 33, wobei vorteilhafte Ausführungen der erfindungsgemäßen Andrückmembran den Ansprüchen 34 bis 56 entnommen werden können.

Eine Andrückmembran der erfindungsgemäßen Art ist leicht austauschbar und eine Stillstandszeit für einen Membranaustausch ist in der Fertigungskette daher nur gering. Gleichzeitig ist es sehr vorteilhaft, dass eine Andrückmembran der erfindungsgemäßen Art auch in bestehenden Laminatoren oder anderen Membranpressen, wie sie beispielsweise aus der Möbelherstellung bekannt sind, nachgerüstet werden kann.

Insbesondere eine Andrückmembran mit einem elektrischen Widerstandsheizelement ist dabei auf einfachste Weise auch in bestehenden Laminatoren nachrüstbar, weil die wesentlichen Bauteile der Heizeinrichtung in die Andrückmembran integriert sind und die elektrischen Anschlussleitungen leicht druckdicht aus dem Laminator herausführbar sind. Wenn der obere Kammerraum ohne Deckel ausgeführt ist, also nur mit Atmosphärendruck belüftet ist, kann eine Nachrüstung mit einer heizbaren Andrückmembran auf einfachste Weise erfolgen. Ein größerer Aufwand ist lediglich für die Anpassung der Prozesssteuerung an die veränderten Verfahrensbedingungen der Wärmeübertragung und an die verkürzten Taktzeiten notwendig.

Die Lösung des das Verfahren für das Laminieren von Bauteilstapeln betreffenden Teils der Aufgabe gelingt erfindungsgemäß mit einem Verfahren, bei welchem jedem der zu laminierenden Bauteilstapel an seiner der Andrückmembran zugewandten Seite Wärme zugeführt wird, wobei die Wärme mittels mindestens eines integral mit der Andrückmembran ausgeführten Heizelementes erzeugt wird.

Besonders vorteilhaft ist es dabei, die Wärme nur von der der Andrückmembran zugewandten Seite des Bauteilstapels her zuzuführen, da die zu laminierenden Schichten meist nicht mittig in einem Bauteilstapel angeordnet sind, sondern näher zu einer Oberfläche hin. Die einzubringende Wärmemenge kann dann von dieser der Andrückmembran zugewandten Seite geringer sein und kann noch weiter verringert werden, wenn ein Wärmeabfluss aus dem Bauteilstapel zu der von der Membran abgewandten Seite durch Wärmeisolation, beispielsweise der Bauteilauflage, verhindert oder zumindest erheblich verringert wird.

Weitere vorteilhafte Ausgestaltungen des Verfahrens können den Ansprüchen 58 bis 60 entnommen werden.

Für die Andrückmembran ist es beispielsweise vorgesehen, dass das Heizelement in die Andrückmembran eingegossen, eingeklebt oder einvulkanisiert ist. Dies hat zum Vorteil, dass die Membran gleichzeitig den mechanischen und elektrischen Schutz der Heizleitungen gewährleistet. Bei dünnen Andrückmembranen ist es aber auch möglich, das Heizelement an die Membranfläche anzukleben oder aufzuvulkanisieren. Eine Kombination von in der Membran und an der Membran ausgeführten Heizelementen in einem Laminator oder auch in einer Andrückmembran ist ebenfalls denkbar.

Während des Pressvorganges ist eine Andrückmembran funktionsbedingt einer elastischen und/oder flexiblen Verformung unterworfen, die abhängig von der Oberflächenform und der Dicke des zu laminierenden Bauteilstapels ist. Ein integral mit der Andrückmembran ausgeführtes Heizelement muss dabei selbstverständlich so ausgeführt sein, dass es die elastische und/oder flexible Verformung mitmachen oder auffangen kann. Dazu ist vorgesehen, die Heizleitungen in geeigneter Weise mäanderförmig oder wendelförmig oder spiralförmig oder in einer Kombination daraus zu verlegen, wobei die Hauptdehnungsrichtungen der Membran maßgebend für die Verlegegeometrie der Heizleitungen sind.

Zusätzlich können für eine stärkere mechanische Belastbarkeit der Heizleitungen diese in geeigneter Weise gestaltet sein, indem sie beispielsweise rohrförmig oder schraubenlinienförmig in Richtung ihrer Längserstreckung ausgeführt sind. Daraus ergibt sich neben einer hohen Flexibilität oder Biegsamkeit auch eine große Fähigkeit zur Aufnahme von elastischen Verformungen, etwa in Form von Dehnungen und den daraus resultierenden Querstauchungen. Derartig ausgeführte, selbst elastische und/oder flexible Heizleitungen können auch geradlinig oder zickzackförmig verlegt werden.

Für Ausführungen, in denen eine notwendige Verformung der Andrückmembran höher ist als die mit den vorgenannten Merkmalen erreichbare Verformbarkeit des Heizelementes, ist vorgesehen, die Verformung der Membran zumindest im Bereich des Heizelementes durch eine geeignete Gestaltung und/oder durch zusätzliche Mittel zu begrenzen. Die Andrückmembran wird dabei mit einem weniger elastischen und/oder flexiblen Kernbereich und einem mehr elastischen und/oder flexiblen Randbereich ausgeführt. Der steifere Kernbereich ist dabei zumindest so groß wie der durch die integralen Heizelemente beheizbare Bereich der Andrückmembran.

Auf die einfachste Weise kann eine Versteifung des Kernbereiches dadurch geschehen, dass die Andrückmembran zumindest im Bereich des Heizelementes eine größere Materialdicke aufweist als im übrigen Bereich. Vorzugsweise nimmt dabei die Materialstärke der Membran in der Übergangszone vom Rand des Heizelementes hin zum übrigen Bereich kontinuierlich ab. Denkbar ist aber auch eine mehrlagige Ausführung der Andrückmembran im Bereich der Heizelemente.

In einer weiteren Ausführungsform sind zumindest über die Fläche des beheizbaren Bereiches der Andrückmembran in oder an der Membran zusätzliche Mittel zur Begrenzung der Verformung vorgesehen. Diese Mittel können beispielsweise als in oder an der Membran angeordnete Platten, Folien, Netze, Stäbe o. ä. ausgeführt sein. Die notwendige Verformung und Dehnung der Membran wird dadurch in den elastischeren und/oder flexibleren Randbereich der Membran verlagert. Werden diese zusätzlichen Mittel aus einem Material mit einer guten Wärmeleitfähigkeit hergestellt, so ergibt sich ein zusätzlicher Vorteil einer gleichmäßigen und schnellen Wärmeverteilung in der Fläche der Andrückmembran. Die Zahl der Heizleiter kann deshalb auf das wärmetechnisch notwendige Maß beschränkt werden und muss nicht den Erfordernissen einer gleichmäßigen Wärmeverteilung angepasst werden.

Insgesamt wird durch die zusätzlichen Mittel nicht nur die mechanische Belastung der Heizleitungen des Heizelementes selbst verringert, sondern es wird vor allem die mechanische Verbindung zwischen Heizleitung und Membranmaterial entlastet, was sich positiv auf die Lebensdauer der erfindungsgemäßen Andrückmembran auswirkt.

Das mit der Andrückmembran integral ausgeführte Heizelement kann als elektrische Widerstandsheizung ausgeführt werden, entweder als Flächenwiderstandsheizung oder als Drahtwiderstandsheizung, wobei die Heizdrähte dann vorzugsweise wendelförmig, spiralförmig oder mäanderförmig mit der Membran verbunden werden.

Denkbar ist auch eine Ausführung mit einem über Induktion oder Wirbelstrom erregbaren Heizelement, wobei Heizleiter des Heizelements hier vorzugsweise als Flächenelemente, wie z.B. Folien, ausgeführt sind oder als Partikel flächenhaft in die Membran eingebracht oder an der Membran angebracht werden können. Dazu kann die Membran beispielsweise bereichsweise mit induktiv aktiven Partikeln dotiert werden. Eine solche Andrückmembran besitzt dann zusätzlich den Vorteil einer kontaktlosen Energieübertragung zur Wärmeerzeugung, was einen raschen Austausch im Schadenfall erleichtert.

In einer weiteren Ausführung kann die Beheizung der Andrückmembran durch ein geeignetes fluides Wärmeübertragungsmittel vorgesehen sein, welches durch Leitungskanäle transportiert wird, welche in die Andrückmembran eingeformt oder eingebracht sind, und/oder welche an der Andrückmembran angeformt oder angebracht sind. Bei in die Membran eingebrachten Leitungskanälen ist es besonders vorteilhaft, wenn diese aus einem ähnlich elastischen und/oder flexiblen Material wie die Andrückmembran selbst ausgeführt sind, wie beispielsweise Silikonschläuche.

In solchen Leitungskanälen ist es auch denkbar, anstelle des wärmeübertragenden Fluidstroms eine elektrische Widerstandsheizleitung einzuführen. Die Heizleitung ist dann zwar genau wie der Fluidstrom nicht fest mit der Andrückmembran verbunden, aber die Wände der Leitungskanäle sind in beiden Fällen unmittelbar integral mit der Andrückmembran ausgeführt, ebenso wie die Heizleitungen der vorher beschriebenen Ausführungsbeispiele unmittelbar integral mit der Andrückmembran ausgeführt sind. Aufgrund der Tatsache, dass eine in einen solchen Leitungskanal eingebrachte Heizleitung genau wie ein Fluidstrom örtlich an den entsprechenden Leitungskanal gebunden ist, ist ein solches Heizelement zumindest mittelbar integral mit der Andrückmembran ausgeführt. Dabei wird die mechanische Belastung der Andrückmembran beim Andrückvorgang nicht direkt auf die Heizleitung übertragen, sondern wirkt sich hauptsächlich auf die Wände der Leitungskanäle aus. Die Heizleitungen werden dazu vorzugsweise mit geringem Spiel in den Leitungskanal eingeführt. Die Leitungskanäle und die zugehörigen Heizleitungen können dabei gemäß den entsprechenden Unteransprüchen gestaltet und verlegt werden.

Die Haltbarkeit und Lebensdauer der Andrückmembran und der Heizelemente können dadurch erheblich gesteigert werden. Zudem hat eine solche mit Leitungskanälen versehene Andrückmembran den Vorteil, dass die Heizleitungen bei einem Defekt leicht auch bei eingebauter Membran ausgetauscht werden können. Muss die gesamte Membran ausgetauscht werden, so kann die Heizleitung aus der defekten Membran zerstörungsfrei entnommen werden und wiederverwendet werden. Damit ist auch der große Vorteil einer einfachen Materialtrennung bei der Entsorgung von verbrauchten Andrückmembranen gewährleistet.

Die für eine Steuerung der Heizelemente erforderlichen Temperaturmessfühler können vorteilhaft wie das Heizelement selbst in die Andrückmembran integriert oder mit der Andrückmembran integral verbunden werden. Die Aufnahme der Messwerte geschieht dabei in nächster Nähe zu der für die zu laminierende Schicht zu messenden Temperatur, wobei der Messfühler gleichzeitig durch die Membran mechanisch und elektrisch geschützt ist. Dabei können auch Reservemessfühler mit integriert werden, die bei Ausfall eines Messfühlers wahlweise aktiviert werden können. Dies ist sinnvoll, weil die Kosten eines Messfühlers unerheblich gegenüber den Stillstandskosten eines Laminators oder den Kosten eines Membranwechsels sind.

Denkbar ist auch eine vorteilhafte Anordnung von Temperaturfühlern außerhalb der integral mit der Andrückmembran verbundenen Heizelemente, wie etwa an der Oberfläche der Bauteilauflage unterhalb des Bauteilstapels. Eine Kontrolle dieser Temperaturen ermöglicht eine verbesserte und sicherere Einflussnahme auf die Prozesssteuerung.

Auch in den bekannten Laminatoren mit Doppelmembran ist eine Verwendung der erfindungsgemäßen Andrückmembran problemlos möglich. Eine Nachrüstung durch Ersetzen einer oder beider Membranen durch eine oder zwei beheizbare Membranen der vorgenannten Art ist ebenfalls durchführbar. Bei einer möglichen Ausführungsform mit zwei beheizbaren Membranen kann die Heizleistung beider Membrane auch wahlweise zusammengeschaltet werden, was eine weitere Prozessoptimierung möglich macht. Auch eine Ausführung der Andrückmembran als Mehrfachmembran mit drei oder mehr Membranen ist möglich.

Weiterhin ist es denkbar, zwischen zwei unbeheizbare Membranen einer Doppelmembran eine beheizbare dritte Membran einzulegen, mit welcher mindestens ein Heizelement integral verbunden ist. Der Zwischenraum zwischen den zwei Membranen der Doppelmembran wird dabei in bekannter Weise zumindest für die Dauer des Andrückvorganges evakuiert, wodurch die zwei unbeheizbaren Membranen der Doppelmembran und die im Zwischenraum befindliche beheizbare Membran gemeinsam die Andrückmembran bilden.

Eine vorteilhafte weitere Ausgestaltung des Laminators sieht vor, dass an einen/den Zwischenraum zwischen je zwei benachbarten Membranen der Andrückmembran eine Einrichtung zum Messen des Drucks in dem Zwischenraum angeschlossen ist. Über diese Druckmesseinrichtung kann auf einfache und zuverlässige Weise eine Information über den Zustand der Andrückmembran gewonnen werden.

In weiterer Ausgestaltung kann der Einrichtung zum Messen des Drucks in dem Zwischenraum eine von Bedienungspersonal des Laminators wahrnehmbare Druckanzeigeeinrichtung nachgeschaltet sein. Schäden der Andrückmembran, die sich in Druckänderungen im Zwischenraum äußern, lassen sich so schnell erkennen und es können die nötigen Maßnahmen eingeleitet oder eingeplant werden.

Alternativ oder zusätzlich kann der Einrichtung zum Messen des Drucks in dem Zwischenraum eine Auswerteeinheit nachgeschaltet sein, mit der bei einem Auftreten eines einen vorgebbaren Grenzwert über- oder unterschreitenden Drucks im Zwischenraum ein Alarm auslösbar ist. In dieser Ausführung wird das Bedienungspersonal entlastet, da hier die Auswerteeinheit es übernimmt, einen Schadensfall festzustellen und als Alarm zur Kenntnis zu bringen.

Mit der Einrichtung zum Messen des Drucks in dem Zwischenraum in ihren verschiedenen Ausführungen wird jeweils die Möglichkeit geschaffen, Undichtigkeiten einer der Membranen, insbesondere der besonders belasteten, mit dem Bauteil in Kontakt tretenden Membran, zuverlässig festzustellen. Wie weiter oben schon erläutert, kann der Betrieb des Laminators auch bei Feststellung einer Undichtigkeit z.B. der mit dem Bauteil in Kontakt tretenden Membran innerhalb der mehrlagigen Andrückmembran zunächst noch weitergehen, da mindestens eine weitere Membran innerhalb der mehrlagigen Andrückmembran noch für die erforderliche Dichtigkeit der Andrückmembran insgesamt sorgt. Es muss lediglich Vorsorge getroffen werden, dass bei nächster Gelegenheit, insbesondere bei der nächsten regelmäßigen Wartung des Laminators, ein Austausch der undichten Membran gegen eine neue Membran erfolgt. Die Einrichtung zum Messen und des Drucks in dem Zwischenraum sorgt für eine frühzeitige Feststellung von Membranundichtigkeiten, bevor diese für das Bedienungspersonal des Laminators mit bloßem Auge erkennbar werden. Damit ist ein besonders sicherer Betrieb des Laminators gewährleistet, was die Produktion von Ausschuss weitestgehend ausschließt.

Weitere vorteilhafte Ausgestaltungen sind in den Unteransprüchen angegeben.

Im Folgenden werden Ausführungsbeispiele der Erfindung anhand einer Zeichnung erläutert. Es zeigen:

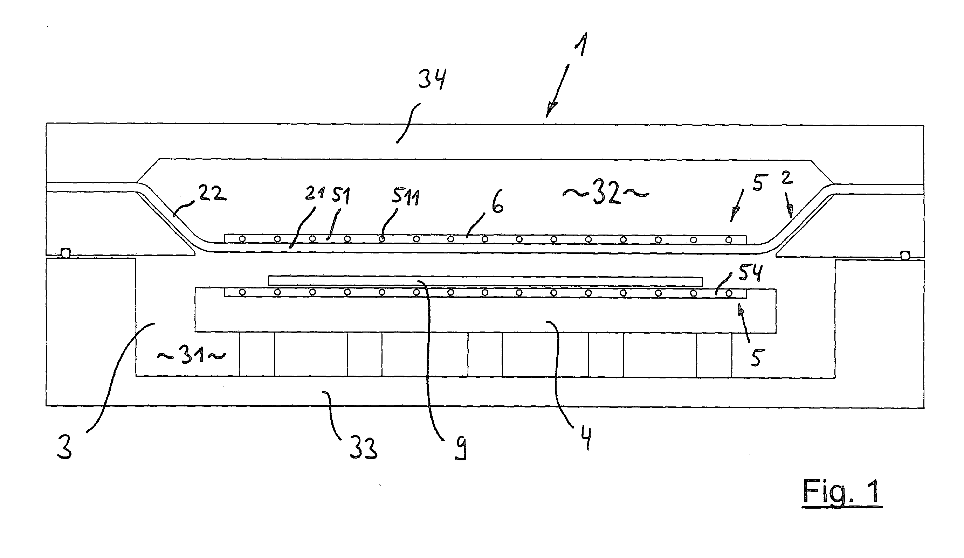

- Fig. 1: einen Laminator bzw. eine Membranpresse in einem Querschnitt,
- Fig. 2: eine beheizbare Andrückmembran in einer isometrischen Darstellung,
- Fig. 3: eine beheizbare Andrückmembran in isometrischer Darstellung mit mehre- ren Heizelementen und einer Verformungsbegrenzung,
- Fig. 4: eine entsprechende Andrückmembran im Querschnitt,
- Fig. 5: eine Andrückmembran mit stärkerer Materialdicke im Bereich des Heizele- mentes im Querschnitt,
- Fig. 6: eine Andrückmembran mit einem an ihrer Oberfläche integral ausgeführten Heizelement,
- Fig. 7: eine Andrückmembran mit mehreren übereinander angeordneten Heizele- menten an ihrer Oberfläche,
- Fig. 8: zwei Andrückmembranen, wobei eine Andrückmembran mit einem integra- len Heizelement ausgeführt ist,
- Fig. 9: zwei nicht beheizbare Andrückmembranen mit einer beheizbaren Membran in der Zwischenlage, und
- Fig. 10: einen Laminator bzw. eine Membranpresse mit einer isolierten Bauteilauf- lage.

Wie die Zeichnungsfigur 1 zeigt, besitzt der Laminator 1 eine Laminierkammer 3, welche von einer Andrückmembran 2 druckdicht in einen unteren Kammerraum 31 und einen oberen Kammerraum 32 getrennt wird. In dem unteren Kammerraum 31 befindet sich eine Bauteilauflage 4, auf welcher ein Bauteilstapel 9 für den Laminiervorgang aufliegt.

Der untere Kammerraum 31 wird druckdicht begrenzt durch das Kammergehäuse 33 einerseits und die Andrückmembran 2 andererseits, so dass der Bauteilstapel 9 sich in dem unteren Kammerraum 31 unterhalb der Andrückmembran 2 befindet. Für den Vorgang des Andrückens wird der untere Kammerraum 31 mit einem Unterdruck versehen bzw. nahezu vollständig evakuiert. Das Druckgefälle zwischen dem unterem Kammerraum 31 unterhalb der Andrückmembran 2 und dem oberen Kammerraum 32 oberhalb der Andrückmembran 2, presst die Membran 2 nach unten bis auf die Oberfläche des Bauteilstapels 9 und der Bauteilauflage 4. Dabei kann der Druck in dem oberen Kammerraum 32 dem Atmosphärendruck entsprechen, was ein druckdichtes oberes Kammergehäuse 34 entbehrlich macht. Zur verbesserten Regulierung der Andrückkraft kann der Luftdruck in dem oberen Kammerraum 32 während des Andrückvorganges von leichtem Unterdruck bis leichtem Überdruck variabel eingestellt werden, indem der durch das obere Kammergehäuse 34 und die Andrückmembran 2 gebildete obere Kammerraum 32 luftdicht verschließbar ist und beide Kammerräume 31, 32 im Verlauf eines Fertigungstaktes jeweils evakuiert und/oder belüftet werden können.

Die zum Verbinden der zu laminierenden Schichten benötigte Wärme wird in mindestens einer Heizungseinrichtung 5 erzeugt und über mindestens ein Heizelement 51 dem Bauteilstapel 9 zugeführt. Bei diesem Ausführungsbeispiel ist das Heizelement 51 an der dem Bauteilstapel 9 abgewandten Seite der Andrückmembran 2 an dieser aufgeklebt oder aufvulkanisiert. Ein zusätzliches Heizelement 54 ist in üblicher Weise an der Bauteilauflage 4 angeordnet, muss hierbei aber nicht mehr die gesamte Wärmemenge für den Laminiervorgang von unten durch den Bauteilstapel 9 zu der zu laminierenden Schicht leiten, sondern wird nur noch zur Steuerung der während der einzelnen Prozessschritte an der Unterseite des Bauteilstapels 9 gewünschten Temperaturen benötigt, wobei diese Temperaturen auch niedriger sein können als die von der Oberseite des Bauteilstapels 9 eingebrachten Temperaturen.

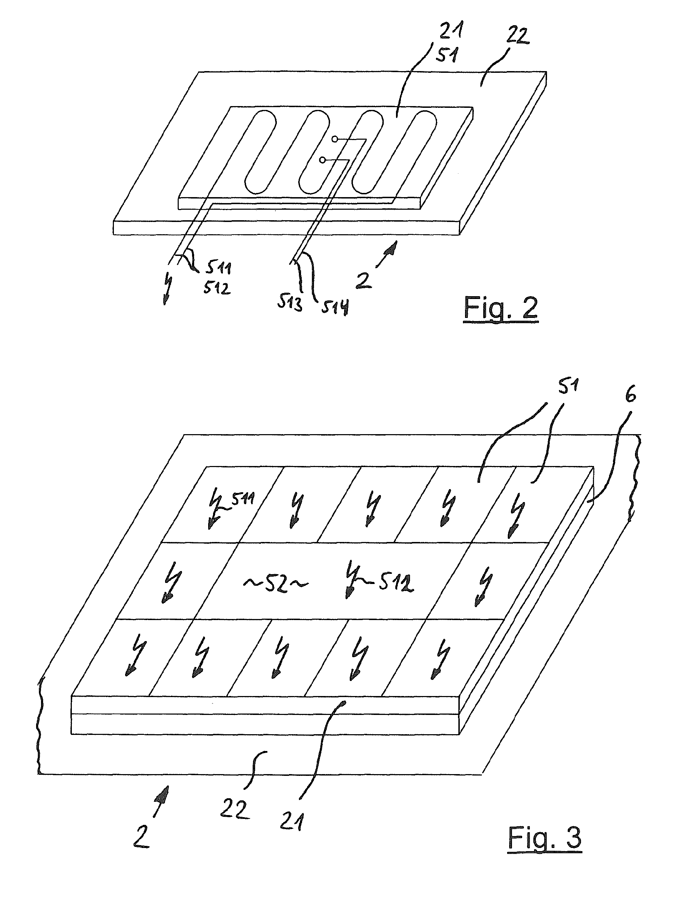

Wie in Fig. 2 ersichtlich besteht die beheizbare Andrückmembran 2 aus einem beheizbaren Kernbereich 21 und einem Randbereich 22 zwischen dem Kernbereich und der Einspannung der Andrückmembran mit dem Kammergehäuse 33, 34. Der beheizbare Bereich der Andrückmembran 2 wird von einem integral mit der Membran verbundenen Heizelement 51 gebildet, wobei das Heizelement 51 in die Andrückmembran 2 eingegossen oder eingeklebt ist. In dem integral mit der Andrückmembran 2 verbundenen Heizelement sind Heizleitungen 511 vorhanden, die in geeigneter Weise verlegt sind, um die beim Andrückvorgang in der Membran auftretenden Verformungen aufzunehmen.

Zusätzlich können für eine stärkere mechanische Belastbarkeit der Heizleitungen 511 diese noch in geeigneter Weise gestaltet sein, indem sie beispielsweise rohrförmig oder schraubenlinienförmig in Richtung ihrer Längserstreckung gestaltet sind.

Fig. 3 zeigt ein Ausführungsbeispiel einer Andrückmembran 2 mit mehreren über die Heizfläche verteilten Heizelemente 51, 52 die vorzugsweise einzeln oder in Gruppen gesteuert werden können. Hierzu ist in oder an den Heizelementen 51, 52 jeweils mindestens ein Temperaturmessfühler 513 vorgesehen, der vorzugsweise ebenfalls integral mit der Andrückmembran 2 ausgeführt ist. Ein zusätzlicher Temperaturmessfühler 514, der im Schadenfalle des ersten Messfühlers 513 aktivierbar ist, verhindert, dass bei einem solchen Defekt eine ganze Andrückmembran 2 ausgetauscht werden muss.

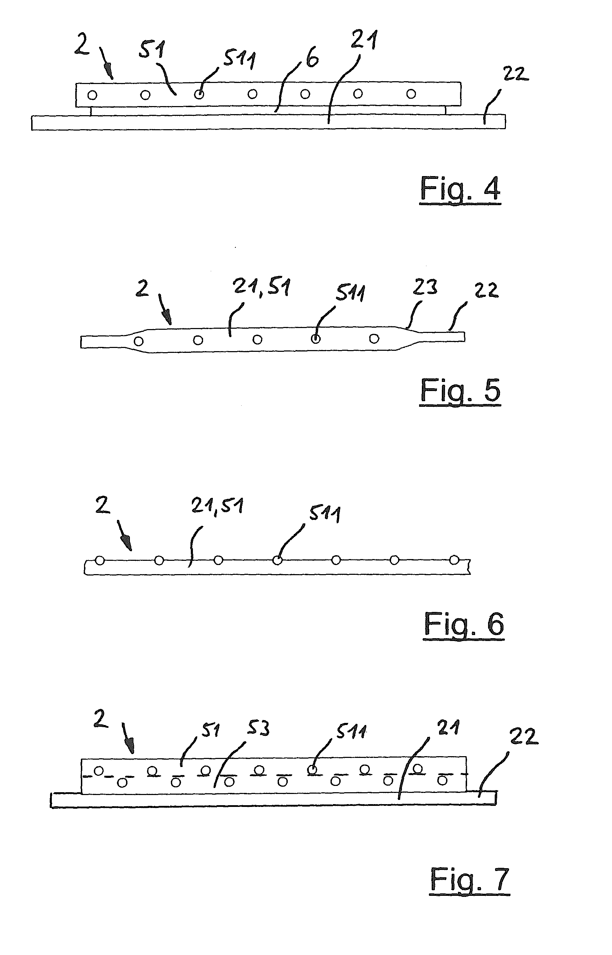

Unterhalb der Heizelemente 51 ist eine dünne Platte oder Folie 6 zur Begrenzung der elastischen und/oder flexiblen Verformung der Andrückmembran 2 angebracht. Die für den Andrückvorgang notwendige elastische und/oder flexible Verformung wird hier in den dehnfähigeren Randbereich 22 der Andrückmembran 2 verlagert, im beheizbaren Bereich ist die Flexibilität nur noch so groß wie es die Beschaffenheit des Bauteilstapels 9 erfordert. In Fig. 4 ist eine solche Membran in einem Querschnitt dargestellt.

Figur 5 zeigt eine Andrückmembran 2, bei der die Begrenzung der Verformung für den beheizbaren Bereich 21 gegenüber dem dehnbaren Bereich 22 durch eine Materialverdickung der Andrückmembran 2 erreicht wird, wobei die Materialstärke in einer Übergangszone 23 kontinuierlich zunimmt.

In Fig. 6 ist eine besonders preiswerte beheizbare Andrückmembran 2 dargestellt, bei welcher das Heizelement 51 im beheizbaren Bereich 21 durch aufgeklebte oder aufvulkanisierte Heizleitungen 511 gebildet wird.

Fig. 7 zeigt eine Anordnung einer Andrückmembran 2 mit mehreren übereinander liegenden Heizelementen, die ebenfalls einzeln oder in Gruppen ansteuerbar sind.

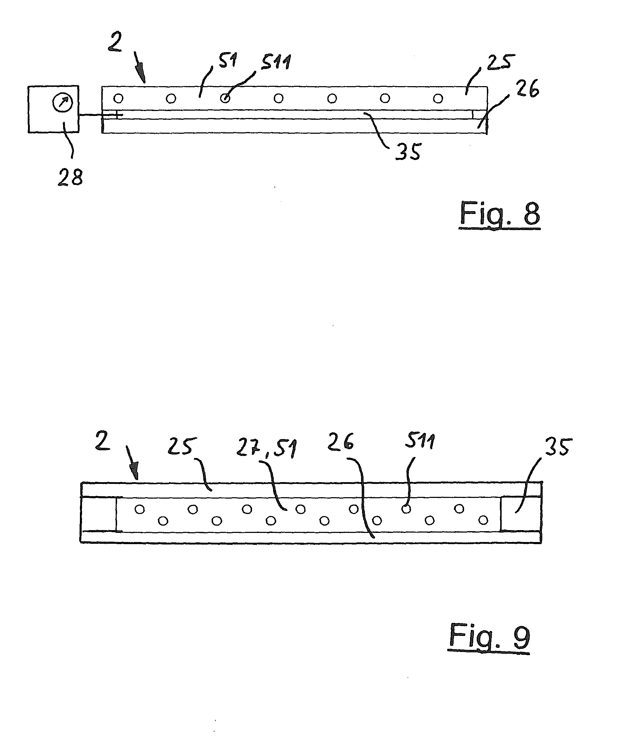

Fig. 8 zeigt ein Ausführungsbeispiel eines Laminators mit einer Doppelmembran in Form von zwei Andrückmembranen 25 und 26, von denen eine mit einem integralen Heizelement 51 ausgeführt ist.

Die Ausgestaltung gemäß Fig. 8 sieht vor, dass an den Zwischenraum 35 zwischen den zwei benachbarten Membranen 25 und 26 der Andrückmembran 2 eine Einrichtung 28 zum Messen des Drucks in dem Zwischenraum 35 angeschlossen ist. Über Druckmessungen mittels dieser Druckmesseinrichtung 28 kann eine Information über die Dichtigkeit der Andrückmembran 2 gewonnen werden. Der Druckmesseinrichtung 28 ist hier eine von Bedienungspersonal des Laminators wahrnehmbare Druckanzeigeeinrichtung zugeordnet. Alternativ oder zusätzlich kann der Druckmesseinrichtung 28 eine Auswerteeinheit zugeordnet sein, mit der bei einem Auftreten eines einen vorgebbaren Grenzwert über- oder unterschreitenden Drucks im Zwischenraum 35 ein Alarm auslösbar ist.

Fig. 9 zeigt eine Doppelmembran aus zwei üblichen, nicht beheizbaren Andrückmembranen 25, 26. Das Heizelement 51 ist hierbei in Form einer weiteren Membran 27 lose in den Zwischenraum 35 zwischen den beiden Andrückmembranen 25, 26 eingelegt. Der Zwischenraum 35 mit der beheizbaren Membran 27 wird auf Dauer oder zumindest für die Dauer des Andrückvorganges evakuiert, so dass sich die beiden Andrückmembranen 25, 26 fest aufeinanderpressen und mit der eingepressten beheizbaren Membran 27 integral eine gemeinsame Andrückmembran 2 bilden. Diese Lösung eignet sich besonders für die Nachrüstung vorhandener Laminatoren.

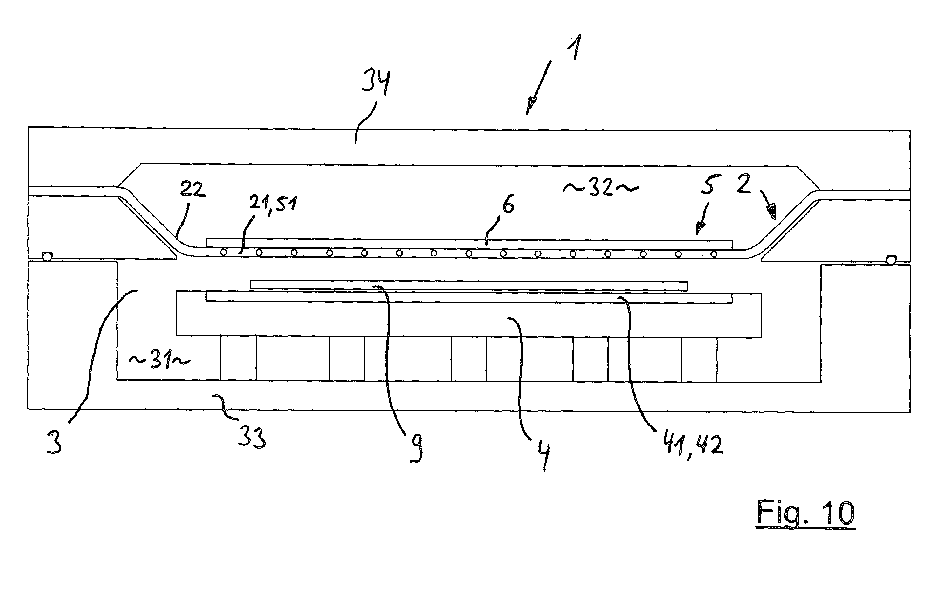

Fig. 10 zeigt ein Ausführungsbeispiel eines Laminators 1, bei welchem die Wärme zum Laminieren des Bauteilstapels 9 nur von der Andrückmembran 2 her in den Bauteilstapel 9 zugeführt wird. Die Bauteilauflage 4 an der Unterseite des Bauteilstapels 9 ist mit einer Isolierauflage 41 versehen, so dass kein oder nur ein geringer Wärmeabfluss aus dem Bauteilstapel 9 in die Bauteilauflage 4 stattfindet.

Anstelle der Isolierauflage 41 kann dabei auch ein Wärmeelement 42 eingesetzt werden, welches es erlaubt, die Temperatur an der Unterseite des Bauteilstapels 9 nicht nur zu messen, sondern auch aktiv nach den jeweiligen Erfordernissen des Prozessablaufs zu verringern oder zu erhöhen.

## Patentansprüche

1. Laminator (1) für das Laminieren von Bauteilen, insbesondere Solarzellenmodulen oder Verbundglasscheiben, durch kombinierte Anwendung von Andrückkraft und Wärme, wobei der Laminator (1) wenigstens eine ein oder mehrere Bauteilstapel aufnehmende Laminierkammer (3) mit einer Bauteilauflage (4) und wenigstens einer Heizeinrichtung (5), bestehend aus jeweils mindestens einem Heizelement (51, 52, 53), umfasst, wobei in der Kammer (3) oberhalb der Bauteilauflage (4) relativ zu dieser beweglich mindestens eine elastische und/oder flexible Andrückmembran (2) druckdicht eingespannt ist, die einen unteren Kammerraum (31) von einem oberen Kammerraum (32) trennt, und wobei zumindest der untere Kammerraum (31) luftdicht verschließbar, sowie evakuierbar und belüftbar ist,
**dadurch gekennzeichnet,**
**dass** mindestens ein Heizelement (51, 52, 53) integral mit der Andrückmembran (2) ausgeführt ist.

2. Laminator nach Anspruch 1, **dadurch gekennzeichnet, dass** zur Aufnahme einer elastischen und/oder flexiblen Verformung der Andrückmembran (2) das mindestens eine Heizelement (51, 52, 53) selbst ausreichend elastisch und/oder flexibel ausgebildet ist.

3. Laminator nach Anspruch 1 oder Anspruch 2, **dadurch gekennzeichnet, dass** zur Aufnahme einer elastischen und/oder flexiblen Verformung der Andrückmembran (2) das mindestens eine Heizelement (51, 52, 53) eine elastische und/oder flexible Anordnung mit der Andrückmembran (2) bildet.

4. Laminator nach Anspruch 1, Anspruch 2 oder Anspruch 3, **dadurch gekennzeichnet, dass** für die Andrückmembran (2) zumindest im Bereich des mindestens einen integralen Heizelementes (51, 52, 53) Mittel (6) zur Begrenzung der elastischen und/oder flexiblen Verformung der Andrückmembran (2) vorgesehen sind.

5. Laminator nach einem der vorhergehenden Ansprüche, **dadurch gekennzeichnet, dass** die Andrückmembran (2) zumindest im Bereich ihres integralen Heizelementes (51, 52, 53) eine größere Materialdicke aufweist als im übrigen Bereich.

6. Laminator nach Anspruch 5, **dadurch gekennzeichnet, dass** die Materialdicke der Andrückmembran (2) in der Übergangszone vom Rand des integralen Heizelementes (51, 52, 53) zum übrigen Bereich hin kontinuierlich abnimmt.

7. Laminator nach Anspruch 4 ,Anspruch 5 oder Anspruch 6, **dadurch gekennzeichnet, dass** die Mittel (6) zur Begrenzung der elastischen und/oder flexiblen Verformung der Andrückmembran (2) als zusätzliche flächige oder netzförmige oder stabförmige Bauteile in und/oder an der Andrückmembran (2) ausgeführt sind.

8. Laminator nach einem der vorhergehenden Ansprüche, **dadurch gekennzeichnet, dass** Heizleitungen (511) der Heizelemente (51, 52, 53) wendelförmig oder spiralförmig oder mäanderförmig zu der Membranfläche verlegt sind

9. Laminator nach Anspruch 8 **dadurch gekennzeichnet, dass** die Heizleitungen (511) schraubenlinienförmig in Richtung ihrer Längserstreckung ausgeführt sind.

10. Laminator nach Anspruch 8 **dadurch gekennzeichnet, dass** die Heizleitungen (511) rohrförmig in Richtung ihrer Längserstreckung ausgeführt sind.

11. Laminator nach einem der vorhergehenden Ansprüche, **dadurch gekennzeichnet, dass** mehrere Heizelemente (51, 52, 53) über die Membranfläche verteilt integral mit der Andrückmembran (2) ausgeführt sind.

12. Laminator nach Anspruch 11, **dadurch gekennzeichnet, dass** mehrere Heizelemente (51, 52, 53) in mehreren Schichten über die Membranfläche verteilt integral mit der Andrückmembran (2) ausgeführt sind.

13. Laminator nach einem der vorhergehenden Ansprüche, **dadurch gekennzeichnet, dass** mehrere integral mit der Andrückmembran (2) ausgeführte Heizelemente (51, 52, 53) einzeln oder in Gruppen steuerbar sind

14. Laminator nach einem der vorhergehenden Ansprüche, **dadurch gekennzeichnet, dass** zur Steuerung der Heizelemente (51, 52, 53) jedem der Heizelemente ein oder mehrere Temperaturmessfühler (513) zugeordnet sind.

15. Laminator nach Anspruch 14, **dadurch gekennzeichnet, dass** jedem der Heizelemente (51, 52, 53) mindestens ein Reservemessfühler (516) zugeordnet ist, welcher wahlweise in Betrieb genommen werden kann.

16. Laminator nach Anspruch 14 oder Anspruch 15, **dadurch gekennzeichnet, dass** die Temperaturmessfühler (513, 516) ebenfalls integral mit der Andrückmembran (2) ausgeführt sind.

17. Laminator nach Anspruch 14 oder Anspruch 15, **dadurch gekennzeichnet, dass** die Temperaturmessfühler (513, 516) in unmittelbarer Nähe der der Andrückmembran (2) abgewandten Seite des Bauteilstapels (9) angeordnet sind.

18. Laminator nach einem der vorhergehenden Ansprüche, **dadurch gekennzeichnet, dass** die Bauteilauflage (4) zum Bauteilstapel (9) hin wärmeisoliert ausgeführt ist.

19. Laminator nach einem der vorhergehenden Ansprüche, **dadurch gekennzeichnet, dass** die Heizelemente (51, 52, 53) in die Andrückmembran (2) eingegossen, eingeklebt oder einvulkanisiert sind und/oder an die Andrückmembran (2) angeklebt oder aufvulkanisiert sind.

20. Laminator nach einem der vorhergehenden Ansprüche, **dadurch gekennzeichnet, dass** die Heizelemente (51, 52, 53) in Form von lose verlegten Heizleitungen innerhalb von in die Andrückmembran (2) eingeformten oder eingebrachten Leitungskanälen ausgeführt sind.

21. Laminator nach einem der vorhergehenden Ansprüche, **dadurch gekennzeichnet, dass** mehrere Heizelemente (51, 52, 53) in gleicher oder unterschiedlicher Verbindungsweise integral mit der Andrückmembran (2) ausgeführt sind.

22. Laminator nach einem der vorhergehenden Ansprüche, **dadurch gekennzeichnet, dass** die Heizelemente (51, 52, 53) als elektrische Widerstandsheizung ausgeführt sind.

23. Laminator nach einem der vorhergehenden Ansprüche, **dadurch gekennzeichnet, dass** die Heizelemente (51, 52, 53) als durch Induktion oder Wirbelstrom heizbare Anordnungen ausgeführt sind.

24. Laminator nach einem der vorhergehenden Ansprüche, **dadurch gekennzeichnet, dass** die Heizelemente (51, 52, 53) als Leitungssystem für ein fluides Wärmetransportmittel ausgeführt ist.

25. Laminator nach einem der vorhergehenden Ansprüche, **dadurch gekennzeichnet, dass** mehrere Heizelemente (51, 52, 53) gleicher oder unterschiedlicher Wirkungsweise integral mit der Andrückmembran ausgeführt sind.

26. Laminator nach einem der vorhergehenden Ansprüche, **dadurch gekennzeichnet, dass** die Andrückmembran (2) als Doppelmembran mit zwei übereinanderliegenden Membranen (25, 26) oder als Mehrfachmembran mit mehr als zwei übereinanderliegenden Membranen ausgeführt ist, wobei von den übereinanderliegenden Membranen wenigstens eine das mindestens eine Heizelement (51, 52, 53) integral aufweist.

27. Laminator nach Anspruch 26, **dadurch gekennzeichnet, dass** die übereinanderliegenden Membranen (25, 26) untereinander identisch ausgeführt sind.

28. Laminator nach Anspruch 26 oder Anspruch 27, **dadurch gekennzeichnet, dass** an einen Zwischenraum (35) zwischen zwei benachbarten Membranen (25, 26) eine Einrichtung zum Evakuieren und/oder Belüften des Zwischenraums (35) angeschlossen ist.

29. Laminator nach einem der Ansprüche 26 bis 28, **dadurch gekennzeichnet, dass** an einen/den Zwischenraum (35) zwischen je zwei benachbarten Membranen (25, 26) der Andrückmembran (2) eine Einrichtung (28) zum Messen des Drucks in dem Zwischenraum (35) angeschlossen ist.

30. Laminator nach Anspruch 29, **dadurch gekennzeichnet, dass** der Einrichtung (28) zum Messen des Drucks in dem Zwischenraum (35) eine von Bedienungspersonal des Laminators (1) wahrnehmbare Druckanzeigeeinrichtung zugeordnet ist.

31. Laminator nach Anspruch 29 oder 30, **dadurch gekennzeichnet, dass** der Einrichtung (28) zum Messen des Drucks in dem Zwischenraum (35) eine Auswerteeinheit zugeordnet ist, mit der bei einem Auftreten eines einen vorgebbaren Grenzwert über- oder unterschreitenden Drucks im Zwischenraum (35) ein Alarm auslösbar ist.

32. Laminator nach einem der vorhergehenden Ansprüche, **dadurch gekennzeichnet, dass** zwei heizelementfreie Membranen (25, 26) vorgesehen sind, dass in dem Zwischenraum (35) zwischen den zwei Membranen (25, 26) eine mittels des wenigstens einen integralen Heizelementes beheizbare Membran (27) angeordnet ist und dass zumindest beim Andrückvorgang der Zwischenraum (35) zwischen den Membranen (25, 26) evakuiert ist, wobei die drei Membranen (25, 26, 27) zusammen die Andrückmembran (2) bilden.

33. Flexible Andrückmembran für das Laminieren oder Zusammenfügen von Bauteilen durch kombinierte Anwendung von Andrückkraft und Wärme, wobei die flexible Andrückmembran (2) dazu dient, in einer Kammer (3) in einem Laminator (1) einen unteren Kammerraum (31) von einem oberen Kammerraum (32) druckdicht zu trennen,
**dadurch gekennzeichnet,**
**dass** mindestens ein Heizelement (51, 52, 53) integral mit der Andrückmembran (2) ausgeführt ist.

34. Flexible Andrückmembran nach Anspruch 33, **dadurch gekennzeichnet, dass** das mindestens eine Heizelement (51, 52, 53) zur Aufnahme einer elastischen und/oder flexiblen Verformung der Andrückmembran (2) selbst ausreichend elastisch und/oder flexibel ausgebildet ist.

35. Flexible Andrückmembran nach Anspruch 33 oder 34, **dadurch gekennzeichnet, dass** das mindestens eine Heizelement (51, 52, 53) zur Aufnahme einer elastischen und/oder flexiblen Verformung der Andrückmembran (2) eine elastische und/oder flexible Anordnung mit der Andrückmembran (2) bildet.

36. Flexible Andrückmembran nach Anspruch 33, 34 oder 35, **dadurch gekennzeichnet, dass** zumindest im Bereich des mindestens einen integralen Heizelementes (51, 52, 53) Mittel (6) zur Begrenzung der elastischen und/oder flexiblen Verformung der Andrückmembran (2) vorgesehen sind.

37. Flexible Andrückmembran nach einem der Ansprüche 33 bis 36, **dadurch gekennzeichnet, dass** die Andrückmembran (2) zumindest im Bereich ihres integralen Heizelementes (51, 52, 53) eine größere Materialdicke aufweist als im übrigen Bereich.

38. Flexible Andrückmembran nach Anspruch 37, **dadurch gekennzeichnet, dass** die Materialdicke der Andrückmembran in der Übergangszone vom Rand des integralen Heizelementes (51, 52, 53) zum übrigen Bereich hin kontinuierlich abnimmt.

39. Flexible Andrückmembran nach Anspruch 36, 37 oder 38, **dadurch gekennzeichnet, dass** die Mittel (6) zur Begrenzung der elastischen und/ oder flexiblen Verformung der Andrückmembran (2) als zusätzliche flächige oder netzförmige oder stabförmige Bauteile in und/oder an der Andrückmembran (2) ausgeführt sind.

40. Flexible Andrückmembran nach einem der Ansprüche 33 bis 39, **dadurch gekennzeichnet, dass** Heizleitungen (511) der Heizelemente (51, 52, 53) wendelförmig oder spiralförmig oder mäanderförmig zu der Membranfläche verlegt sind

41. Flexible Andrückmembran nach einem der Ansprüche 33 bis 39, **dadurch gekennzeichnet, dass** Heizleitungen (511) der Heizelemente (51, 52, 53) schraubenlinienförmig in Richtung ihrer Längserstreckung ausgeführt sind.

42. Flexible Andrückmembran nach einem der Ansprüche 33 bis 41, **dadurch gekennzeichnet, dass** Heizleitungen (511) der Heizelemente (51, 52, 53) rohrförmig in Richtung ihrer Längserstreckung ausgeführt sind.

43. Flexible Andrückmembran nach einem der Ansprüche 33 bis 42, **dadurch gekennzeichnet, dass** mehrere Heizelemente (51, 52, 53) über die Membranfläche verteilt integral mit der Andrückmembran (2) ausgeführt sind.

44. Flexible Andrückmembran nach einem der Ansprüche 33 bis 43, **dadurch gekennzeichnet, dass** mehrere Heizelemente (51, 52, 53) in mehreren Schichten über die Membranfläche verteilt integral mit der Andrückmembran (2) ausgeführt sind.

45. Flexible Andrückmembran nach einem der Ansprüche 33 bis 44, **dadurch gekennzeichnet, dass** mehrere integral mit der Andrückmembran (2) ausgeführte Heizelemente (51, 52, 53) einzeln oder in Gruppen steuerbar sind.

46. Flexible Andrückmembran nach einem der Ansprüche 33 bis 45, **dadurch gekennzeichnet, dass** zur Steuerung der Heizelemente (51, 52, 53) jedem der Heizelemente ein oder mehrere Temperaturmessfühler (513) zugeordnet sind.

47. Flexible Andrückmembran nach Anspruch 46, **dadurch gekennzeichnet, dass** jedem der Heizelemente (51, 52, 53) mindestens ein Reservemessfühler (514) zugeordnet ist, welcher wahlweise in Betrieb genommen werden kann.

48. Flexible Andrückmembran nach Anspruch 46 oder Anspruch 47, **dadurch gekennzeichnet, dass** die Temperaturmessfühler (513, 514) ebenfalls integral mit der Andrückmembran (2) ausgeführt sind.

49. Flexible Andrückmembran nach Anspruch 46 oder Anspruch 47, **dadurch gekennzeichnet, dass** die Temperaturmessfühler (513, 514) räumlich getrennt von der Andrückmembran (2) anbringbar sind.

50. Flexible Andrückmembran nach einem der Ansprüche 33 bis 49, **dadurch gekennzeichnet, dass** die Heizelemente (51, 52, 53) in die Andrückmembran (2) eingegossen, eingeklebt oder einvulkanisiert sind und/oder an die Andrückmembran (2) angeklebt oder aufvulkanisiert sind.

51. Flexible Andrückmembran nach einem der Ansprüche 33 bis 49, **dadurch gekennzeichnet, dass** die Heizelemente (51, 52, 53) in Form von lose verlegten Heizleitungen innerhalb von in die Andrückmembran (2) eingeformten oder eingebrachten Leitungskanälen ausgeführt sind.

52. Flexible Andrückmembran nach einem der Ansprüche 33 bis 51, **dadurch gekennzeichnet, dass** mehrere Heizelemente (51, 52, 53) in gleicher oder unterschiedlicher Verbindungsweise integral mit der Andrückmembran (2) ausgeführt sind

53. Flexible Andrückmembran nach einem der Ansprüche 33 bis 52, **dadurch gekennzeichnet, dass** die Heizelemente (51, 52, 53) als elektrische Widerstandsheizung ausgeführt sind.

54. Flexible Andrückmembran nach einem der Ansprüche 33 bis 53, **dadurch gekennzeichnet, dass** die Heizelemente (51, 52, 53) als durch Induktion oder Wirbelstrom heizbare Anordnungen ausgeführt sind.

55. Flexible Andrückmembran nach einem der Ansprüche 33 bis 54, **dadurch gekennzeichnet, dass** die Heizelemente (51, 52, 53) als Leitungssystem für ein fluides Wärmetransportmittel ausgeführt sind.

56. Flexible Andrückmembran nach einem der Ansprüche 33 bis 55, **dadurch gekennzeichnet, dass** mehrere Heizelemente (51, 52, 53) gleicher oder unterschiedlicher Wirkungsweise integral mit der Andrückmembran (2) ausgeführt sind.

57. Verfahren für das Laminieren von Bauteilstapeln, insbesondere Solarzellenmodule oder Verbundglasscheiben, in einem Laminator (1) durch kombinierte Anwendung von Andrückkraft und Wärme, wobei der Laminator (1) wenigstens eine ein oder mehrere Bauteilstapel (9) aufnehmende Laminierkammer (3) mit einer Bauteilauflage (4) und wenigstens einer Heizeinrichtung (5), bestehend aus jeweils mindestens einem Heizelement (51, 52, 53), umfasst, wobei in der Kammer (3) oberhalb der Bauteilauflage (4) relativ zu dieser beweglich mindestens eine elastische und/oder flexible Andrückmembran (2) druckdicht eingespannt ist, die einen unteren Kammerraum (31) von einem oberen Kammerraum (32) trennt, und wobei zumindest der untere Kammerraum (31) luftdicht verschließbar, sowie evakuierbar und belüftbar ist,
**dadurch gekennzeichnet,**
**dass** jedem der zu laminierenden Bauteilstapel (9) an seiner der Andrückmembran (2) zugewandten Seite Wärme zugeführt wird, wobei die Wärme mittels mindestens eines integral mit der Andrückmembran (2) ausgeführten Heizelements (51, 52, 53) erzeugt wird.

58. Verfahren nach Anspruch 57 **dadurch gekennzeichnet, dass** jedem der zu laminierenden Bauteilstapel (9) zusätzlich an seiner der Andrückmembran (2) abgewandten Seite Wärme zugeführt wird.

59. Verfahren nach Anspruch 57, **dadurch gekennzeichnet, dass** ein Wärmeabfluss aus dem Bauteilstapel (9) auf seiner der Andrückmembran (2) abgewandten Seite durch wärmeisolierende Mittel verhindert oder vermindert wird.

60. Verfahren nach einem der Ansprüche 57 bis 59, **dadurch gekennzeichnet, dass** zur Steuerung der Wärmezufuhr zu messende Temperaturwerte in unmittelbarer Nähe der der Bauteilauflage (4) zugewandten Seite des Bauteilstapels (9) aufgenommen werden.
